# EUROPEAN PATENT APPLICATION

(11) **EP 3 692 872 A1**
(43) Date of publication of application: **12.08.2020**
(21) Application number: 19156123.2
(22) Date of filing: 08.02.2019
(51) Int. Cl.: A47J 42/40, G01F 19/00

(54) **A SPICE GRINDER WITH A MEASURABLE CUP**

(71) Applicant: Moens, Marnix, 1910 Kampenhout (BE); Van Pottelbergh, Simon, 3450 Geetbets (BE)
(72) Inventor: Moens, Marnix, 1910 Kampenhout (BE); Van Pottelbergh, Simon, 3450 Geetbets (BE)
(74) Representative: BiiP cvba

(57) **Abstract**

The present invention provide a spice grinder with a grinding mechanism, a measuring cup and a particle size adjuster. The spice grinder manually grinds a desired type of spice with a desired particle size in a desired amount.

## Description

### FIELD OF INVENTION

The present invention generally relates to spice grinders. More particularly, the present invention relates to grinding devices for spices comprising an inner and outer container further comprising a grinding part and a measuring cup.

### BACKGROUND OF INVENTION

Conventional methods for grinding spices or other condiments include two milling or grinding parts between which a required condiment is ground. These methods may be manual, automatic or semi-automatic. Normally, a grinding device may include a rotor part which rotates relative to a stator part, and distance between the rotor and the stator may be adjusted to change the ground size. Such adjustment of the distance between the rotor and the stator may be implemented using a screw system, or a threaded system. Achieving an appropriate grain size for grinding spices becomes very important, since a properly ground spice has a particular taste and other properties. Therefore, while grinding spices, an appropriately required grain size is kept in mind for obtaining particular properties in the ground spices.

One such solution is disclosed in a prior art document US7967229B2 which describes an adjustable grinder, including a container, a stator, a rotor, a drum, and a rotary slide. The container can hold a product to be ground. The stator is positioned on the container. The rotor is positioned opposite to the stator and can rotate with respect to the stator. The drum is positioned around the rotor. The rotary slide includes a pointer that can be adjusted such that a distance between the stator and the rotor increases or decreases.

Another prior art document US7984868B2 discloses a grinder which includes a grinder assembly retained in a housing. The grinder assembly receives grinding material such as coffee beans. Grinding burrs are provided, one of which is rotated by a grinder drive motor of the grinder assembly. The other of the burrs is generally non-rotatable with regard to the general grinding operation. The two grinding burrs are provided with grinding surfaces against which beans are ground. The grinding surfaces are spaced a desired dimension away from each other to produce a desired grind of coffee. An apparatus, system and method is disclosed for adjusting at least the generally non-rotatable burr to maintain, calibrate or otherwise adjust the dimension or gap between the grinding surfaces of the burrs.

There exist solutions for grinding coffee to have a particular size for the best taste. One such solution is disclosed in a prior art document EP1994866A1 discloses a device for the grinding of coffee, for instance in (semi)automatic machines for the preparation and the dispensing of drinks, comprising a housing, inside which are positioned at least two milling heads of which at least one is revolving, means of driving said at least one revolving milling head, an inlet for feeding the coffee between the milling heads and an exit for the ground coffee. Advantageously, the housing and the milling heads internal to it are coupled to the means of driving through an insert-and-lock joint that allows their rapid removal and reassembly without the aid of tools. Preferably the device includes means of regulating the relative distance between the milling heads and at least one sensor for the measurement of such distance and/or a sensor of the speed of rotation of the drive shaft.

As disclosed in the above examples of prior art documents, although the present technologies disclose grinders for grinding spices or condiments like pepper, coffee etc., while adjusting the grain size, the devices generally present are not portable and manually functioning. Further, some of the present portable solutions fail to include a mechanism which can allow for measuring the spices while they are being ground, so that only a required amount of spices are ground. Additionally, dispensing or pouring the ground spices out from the present devices generally is uneven, and may become messy to dispense the spices. Also, an appropriate amount of spices to be dispensed out from the devices is unknown, and generally a user dispenses out the ground spices vaguely based on a manual visual observation.

Hence, there arises a need to provide a portable solution for grinding spices which is easy to use requiring minimal user effort, and which allows for even dispensing of the ground spices in an exact required amount.

### SUMMARY OF INVENTION

In accordance with the present invention, it is an objective of the present invention to provide a portable, easy to use grinding device for grinding different types of spices with particle size adjuster, and which includes a means to easily and effectively measure the amount of spices being ground and to be dispensed. It is further an objective of the present invention to provide an easy and more controlled way to measure and dispense the ground spices. It is further an objective of the present invention to be portable, manual and easy to use requiring minimal user effort. In order to meet the objectives, a grinder is provided comprising an inner container and a grinding part, said inner container being provided within an outer container and grinding part preferably being provided opposite to the inner container and whereby said outer container comprises a measuring cup

The present invention comprises a grinder with at least two reservoirs: A first inner reservoir with a cylindrical hollow shaped reservoir with an opening on top in which the grinding goods can be stored/packed. A second outer hollow reservoir contains the inner reservoir comprising a bottom dispensing opening on the opposite side of the top opening of the inner reservoir.

Another feature of the present grinder is the 'twist' action. The action comprises three steps after filling the dispenser with edible goods. The grinder first needs to be turned upside down to release the edible goods from the inner reservoir to the grinder part. Then the edible goods can be grinded. The grinded edible goods are now contained in the outer reservoir or in the measuring cap. In the last step the dispenser can be turned back to the original position to dispense the grinded goods through the dispensing opening on the bottom. Alternatively, when the measuring cap can be opened or detached, the grinded goods are dispensed from the top.

It is clear from the above that also the measuring cap provides a hygienic improvement since the grinded goods should no longer be dispensed via contact with the hand. The inner reservoir is used to hold the edible articles. This can be one or more edible goods e.g. spices and the like and mixtures thereof. The inner reservoir can also comprise several compartments, to make the grinder more flexible and hold different contents (e.g. salt and pepper). Example is in one compartment pepper and in a further compartment salt or other spices which can be each collectively or separately dosed and dispensed. The dimensions of the inner and outer container are chosen to ensure the grinder to be handy, have a handy grip and making dosing and adapted to the volume and type of dispensing medium. The outer reservoir preferably comprises two parts: an upper and bottom part. This is done to be able to open the dispenser easily and (re)fill the inner reservoir with edible articles. The upper and bottom part are preferably engaged to each other fixing means. Such fixing means include snap fittings, connectors, a connecting rim or the like. These fixing means should allow the upper and bottom part to be revolved easily. The inner reservoir that is contained in the outer reservoir can be manufactured in one piece together with the bottom part of the outer reservoir. The inner reservoir can also be manufactured as a package, so when empty the entire inner reservoir can be changed for a full/new inner reservoir/package. The two outer parts can comprise fixing means such as fins, securing the inner reservoir within the outer reservoir. These fixing means may also guide the edible articles towards the bottom opening of the bottom part.

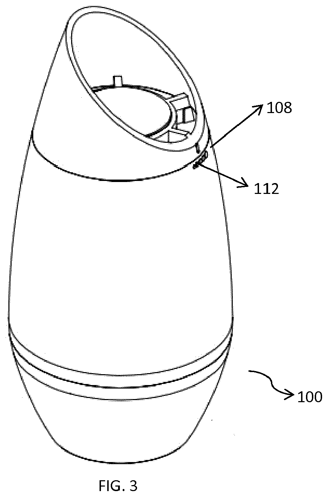

When the inner reservoir comprises more than one compartment as shown in fig.3 , the upper part 1 of the outer reservoir can be provided with means for selecting a specified compartment 2, by making a revolving movement, this to only dispense a selected edible article.

In further improving the dosage feature the bottom opening of the outer reservoir can also be provided with an adjustable dosing means. This can be in the form of a revolving attachment, to vary the size of the opening. Other means of varying the opening can also be used.

Other attachments with all kinds of functions can also be connected to bottom opening of the outer reservoir. Such attachments may include further dosage means, grinding means, cutting means or the like.

A further aspect of the present invention provides a grinder comprising rotating inner container; a stationary grinding part; and a grinding handle forming a grinding mechanism, where the rotating inner container, being provided within an outer container, for containing a product to be ground and the stationary grinding part being provided opposite to the inner container, and where the rotating inner container being positioned and rotatably coupled to the grinding handle to rotate freely on the grinding handle as the grinding handle is twisted, the inner container being configured to rotate relative to the stationary grinding part; a particle size adjuster for adjusting particle size of ground product by controlling a distance between the rotating inner container and the stationary grinding part; and a measuring cup for observing quantity of product while being ground using the grinding mechanism and evenly dispensing out, in a controlled way, a desired quantity of the ground product. The ground product can either be removed by a twist whereby the ground product is dispensed via the bottom part of the outer container or can be dispensed via the measuring cup which can be opened or removed.

Another aspect of the present invention provides a method for manufacturing a grinder, the method comprises providing an outer container coupled with a twisting grinding handle, the outer container and the grinding handle forming an outer body of the grinder; providing a rotating inner container inside the outer body of the grinder, the rotating inner container being positioned relative to and configured to rotate with the twisting grinding handle, where the rotating inner container further configured to contain a desired quantity of product; providing a stationary grinding part positioned opposite to the rotating inner container, where the rotating inner container is configured to rotate using the twisting grinding handle and relative to the stationary grinding part; providing a measuring cup on the outer container, over the stationary grinding part, covering the outer body of the grinder, where the measuring cup is configured for observing quantity of product while being ground by rotating the inner container relative to the stationary grinding part, and allowing ground product to enter the measuring cup from the inner container through a controlling mechanism, the measuring cup , in another sub embodiment in accordance of the present invention can be further configured for evenly dispensing out, in a controlled way, a desired quantity of ground product by opening or removing the measuring cup; and providing a particle size adjuster around the outer container for adjusting particle size of the ground product by rotating the particle size adjuster along the outer container and controlling a distance between the rotating inner container and the stationary grinding part.

The foregoing and other objects, features and advantages of the invention will be apparent from the following more particular descriptions of exemplary embodiments of the invention.

### BRIEF DESCRIPTION OF DRAWINGS

FIG. 1 illustrates a front view of an exemplary embodiment of a spice grinder, in accordance with an embodiment of the present invention;
FIG. 2 illustrates a perspective view of the spice grinder for grinding spices, in accordance with an embodiment of the present invention;
FIG. 3 illustrates the perspective view of the spice grinder with its measuring cup removed, in accordance with an embodiment of the present invention;
FIGs. 4A and 4B illustrate a sectional side view and a sectional perspective view of the spice grinder, in accordance with an embodiment of the present invention;
FIGs. 5A and 5B illustrate a bottom view of the spice grinder with a closing lid closed and opened respectively, in accordance with an embodiment of the present invention; and
FIG. 6 illustrates a flow chart showing a method for grinding spices using the spice grinder, in accordance with an embodiment of the present invention.

### DETAILED DESCRIPTION

This patent describes the subject matter for patenting with specificity to meet statutory requirements. However, the description itself is not intended to limit the scope of this patent. The principles described herein may be embodied in many different forms.

A grinder comprising an inner container and a grinding part, said inner container being provided within an outer container whereby said outer container comprises a measuring cup.

A grinder in accordance with claim 1 wherein said grinding part comprises:
a grinding handle forming a grinding mechanism, said grinding part being provided opposite to the inner container, and where the rotating inner container being positioned and rotatably coupled to the grinding handle such that the inner container rotates along with the grinding handle as the grinding handle is turned, the inner container being configured to rotate relative to the grinding part;
A grinder in accordance with claim 1 and 2 further comprising: a particle size adjuster for adjusting particle size of ground product by controlling a distance between the rotating inner container and the stationary grinding part; and a removable measuring cup for observing quantity of product while and or after being ground using the grinding mechanism and dispensing out, a desired quantity of the ground product by twisting the grinder.

The grinder in accordance to claim 1-3, wherein the measuring cup is transparent allowing a user to observe the quantity of the ground product while and after the product is being ground, and/or whereby the measuring cup is graded with visual measuring markings or levels.

The grinder as claimed in claim 1-4, wherein the measuring markings are equally spaced marked lines on the measuring cup referring to measurable units for measuring quantities including grams, milligrams.

The grinder as claimed in claims 1-5, wherein the grinder further comprises a controlling mechanism for controlling the quantity of the ground product to be filled in the measuring cup; the controlling mechanism is radially provided between the inner container and the measuring cup around the grinding part allowing a portion of the ground product to enter the measuring cup, from the inner container, as and when the product is ground.

The grinder as claimed in claim 1-6, wherein the particle size adjuster is provided with visible particle size markings corresponding to multiple particles sizes which can be achieved from the grinder.

The grinder as claimed in claim 1-7, wherein the stationary grinding part is positioned at an axial distance opposite to the rotating inner container inside the grinder, and the rotating inner container and the stationary grinding part have respective grinding surfaces facing opposite to each other.

The grinder as claimed in claim 1-8, wherein the outer container and the grinding handle together form the outer body of the grinder, while the grinding handle is rotatable around the outer container.

The grinder as claimed in claim 1-9, wherein the particle size adjuster is rotated or turned along the outer container and is locked at a desired particle size marking corresponding to a particular desired particle size, the twisting of the particle size adjuster moves the stationary grinding part closer to or away from the rotating inner container depending on the desired locked particle size marking, and wherein the grinding part locks at the desired particle size marking, reaching a distance, corresponding to the locked particle size marking, relative to the inner container.

The grinder as claimed in claim 1-10, wherein the grinder grinds the product including spices, herbs, berries, other condiments such as coffee.

A method for manufacturing a portable grinder, the method comprises: providing an outer container coupled with a rotating or turning grinding handle, the outer container and the grinding handle forming an outer body of the grinder; providing an inner container inside the outer container of the grinder, the inner container being positioned relative to and configured to rotate with the rotating or turned grinding handle, providing a grinding part positioned opposite to the inner container, where the inner container is configured to rotate using the twisting grinding handle and relative to the grinding part; providing a measuring cup on the outer container.

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

The present invention is directed to a grinder comprising an inner container and a first (embedded) grinding part, said inner container being provided within an outer container and a second grinding part preferably being provided opposite to the inner container and whereby said outer container comprises a measuring cup

The present invention provides a portable, easy to use spice grinder or a grinding device that includes a grinding mechanism for grinding spices or other condiments; a particle size adjuster and a , optionally removable, measuring container or a cup for measuring the spices while they are being ground. The grinding mechanism preferably includes a stationary part and a rotating part; each has a respective grinding surface positioned opposite to each other at a distance apart. The rotating part rotates relative to the stationary part, and which when rotated with respect to the stationary part grinds the spice contained in the grinder. Further, the particle size adjuster may be functioned to obtain a desired particle size in grinding. Also, while the spices are being ground inside the grinder, the measuring container can measure the amount of the spices that has been ground, and the measuring container may be optionally be removed or opened for an effective dispensing of the ground spices out from the grinder or be dispensed by the twist movement as referred to above.

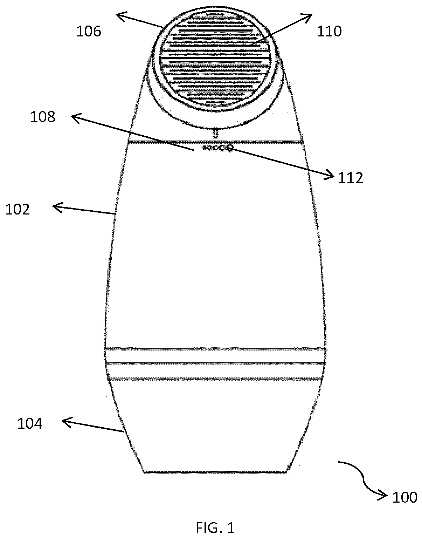

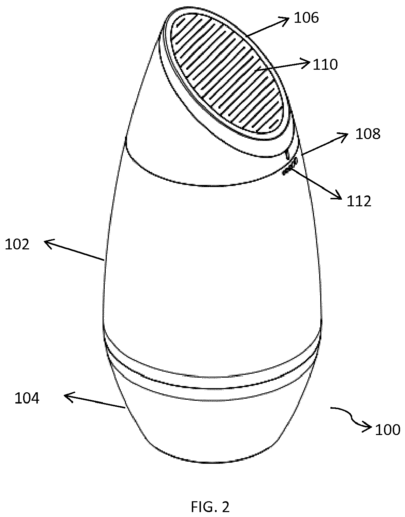

Referring to FIGs. 1-5, illustrating different views of an exemplary portable spice grinder, in accordance with an embodiment of the present invention, the spice grinder 100 comprises an outer container 102, a grinding handle 104, a removable measuring cup 106 and a particle size adjuster 108. The outer container 102 and the grinding handle 104 forms an outer body of the grinder 100. The grinding handle 104 is coupled to the outer container 102, such that the grinding handle 104 is able to rotate along the coupling. Further, the measuring cup 106 is graded and provided with visual measuring grades or markings 110 which allow a user to visually measure the spices as they are being ground. FIG. 3 shows the measuring cup 106 in case the measuring cup is removed. In an embodiment, the measuring markings 110 may be equally spaced marked lines on the cup 106 referring to measurable units for quantities, such as grams, milligrams, etc. The cup 106 can contain the spices when they are ground, and the ground spices can be measured accordingly via the measuring grades 110. The cup 106 can remain unopened or not removed or alternatively be easily removed for an easy and controlled dispensing of the ground spices in an exact measured amount. It may be apparent to a person skilled in the art that the measuring cup 106 may be manufactured in a suitable shape to contain, measure and dispense ground spices, such as the one shown in FIGs. 1-5, a round shape, hemispherical, cuboid, or any other depending on the design and requirements of the measuring cup 106, without deviating from the meaning and scope of the present invention. Further, the particle size adjuster 108 is also provided with visible markings 112 referring to multiple particles sizes which can be obtained from the grinder 100. The particle size adjuster 108 may be twisted related to the visible markings 112 for achieving a desired particle size.

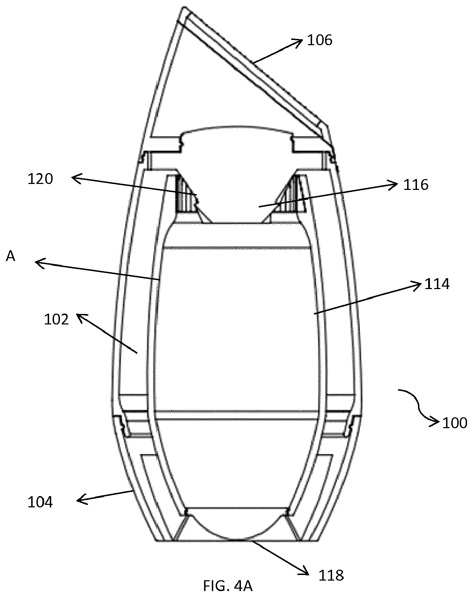

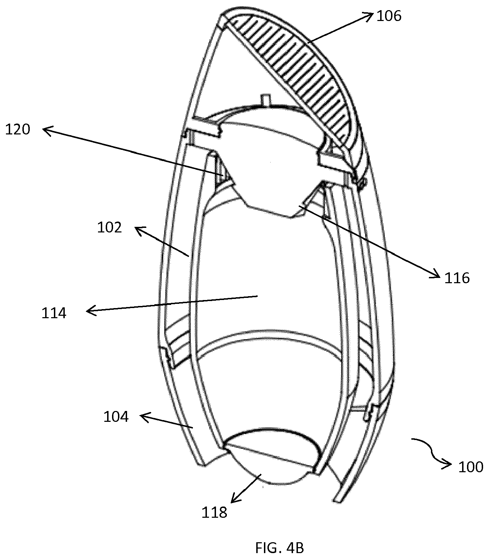

Now referring to FIGs. 4A and 4B, showing grinding mechanism, according to an embodiment of the present invention. The grinder 100 includes a grinding mechanism which further includes a rotating inner container 114 and a stationary grinding part 116. The rotating inner container 114 is positioned and coupled to the grinding handle 104 in a way that the inner container 114 rotates along with the grinding handle 104. Hence, as the user rotates the grinding handle 104, the inner container 114 rotates with the grinding handle 104. The inner container 114 is driven rotationally by way of the grinding handle 114, which forms a part of the outer body of the grinder 100. Therefore, the outer container 102 and the grinding handle 104 together form the outer body of the grinder 100, while the grinding handle 104 is rotatable around the outer container 102.

Further, the stationary grinding part 116 is provided at an axial distance from the inner container 114 inside the grinder 100. The stationary grinding part 116 is positioned opposite to the inner container 114, having their respective grinding surfaces facing opposite to each other. The grinding surface of the inner container 114 and the grinding part 116 are spaced away at a distance from each other to produce a grind of spice with a particle size, depending on the distance between the grinding surfaces of the inner container 114 and the grinding part 116. This distance, may be termed as the grinding distance, and can be controlled and adjusted using the particle size adjuster 108. Lesser the distance between the two grinding surfaces, finer will be the grind of spice.

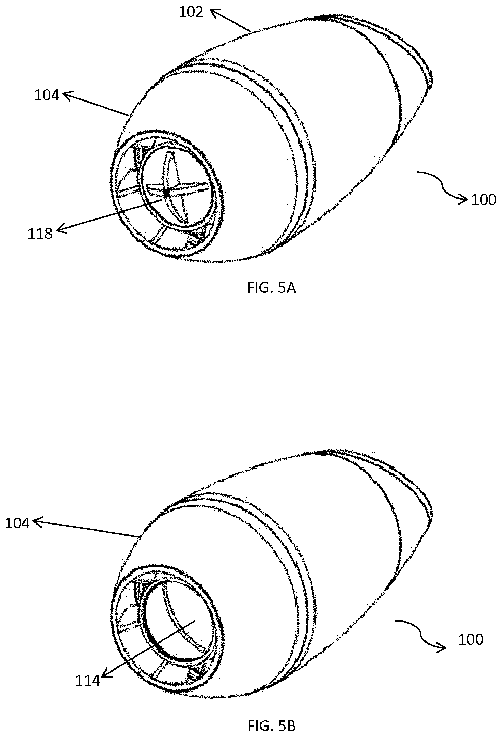

For grinding desired spices, a closing lid 118 may be opened (as shown in FIG. 5B), and a desired amount of spices can be filled into the grinder 100. The inner container 114 contains the amount of the spices which can be ground using the grinder 100. To grind the spices, the user rotates the grinding handle 104, which in-turn rotates the inner container 114 which is rotatably coupled to the grinding handle 104. A portion of the grinding surface of the inner container 114 is provided with a plurality of teeth 120 facing the grinding surface of the stationary grinding part 116. In an embodiment, the inner container 114 may be provided with a suitable number of rows of teeth for grinding the spices. In an embodiment, the whole grinding surface of the inner container 114 is provided with the plurality of teeth.

As the grinding handle 104 is twisted, the inner container 114 rotates with respect to the opposite facing stationary grinding part 116. As the inner container 114 rotates opposite to the stationary grinding part 116, the spices, contained in between the respective grinding surfaces of the inner container 114 and the grinding part 116, grind owing to the rotatory movement of the inner container 114 and the presence of the plurality of teeth 120 on the grinding surface of the inner container 114.

Further, a particle size of the grind may also be selected using the particle size adjuster 108. The adjuster 108 is twisted along the outer container 102 and is locked at a desired particle size marking 112 corresponding to a particular particle size. In case the inner container is a multicompartment container, the adjuster will also allow the user to choose which goods he wishes to select to grind. Therefore, the user may choose a desired spice, a desired particle size, rotate the adjuster 108, and bring the adjuster 108 pointing to that marking 112. Each size marking 112 corresponds to a predetermined particle size or a predetermined good to be grinded. As the adjuster 108 is rotated, the axial distance between the inner container 114 and the grinding part 116 can be adjusted. For achieving a desired good and/or desired particle size, the adjuster 108 is rotated to the corresponding marking 112, and is locked at that marking. The grinding part 116 moves closer to the inner container 114 according to the locked particle size marking 112. As the grinding part 116 reaches the appropriate distance relative to the inner container 114 based on the locked particle size marking 112, the grinding part 116 gets locked at that position, and becomes stationary for the grinding process. Hence, the user may adjust the particle size for achieving a desired particle size of the spice grind and the selection of the spice grind.

As the grinding handle 104 keeps on rotating twisting, the inner container 114 rotates relative to the grinding part 116, and grinds the spices contained in it. Further, as the grinding continues, the ground spices collects in the measuring cup 106. The measuring cup 106 has transparent cover which allows the user to watch the quantity of the spices being ground. For obtaining a required amount of ground spices, the user has to watch through the transparent cover, and measure the ground spices using the measuring markings 110. The user can stop rotating the grinding handle 104 once the ground spices has reached a desired measuring marking 110 corresponding to the desired quantity of ground spices.

Further, for dispensing the ground spices out of the grinder, the grinding handle 104 is moved back to its original position in which the spices are filled into the inner container 114. In one specific embodiment, the measuring cup 106 is removed, and an exact measured amount of ground spices with desired particle size are dispensed neatly out of the grinder 100 without creating any messy situation. In another embodiment, the measuring cap can be opened. Alternatively, the measuring cap remain on the container unopened allowing the goods to be dispensed via a twist out of the bottom part of the outer container as a result of the dispensing channels (FIG 4A.) present between the inner and outer container.

The measuring cup 106 allows for a controlled dispensing feature, by allowing the user to watch the amount of spices which are being ground, while the grinding process continues. During the grinding process, the amount of spices which are ground keeps on filling into the measuring cup 106 in a controlled way by means of a controlling mechanism between the measuring cup 106 and the inner container 114. Therefore, the measuring cup 106 and the inner container 114 are provided with the controlling mechanism in between that allows only a portion of the ground spices to enter the measuring cup 106 as and when the spices are ground. The controlling mechanism may be in the form of a series of spaced ribs radially positioned between the measuring cup 106 and the inner container 114 around the grinding part 116, where the ribs are configured to pass the ground spices through them and into the measuring cup 106 in a controlled way. It may be apparent to a person skilled in the art that the controlling mechanism may be provided in many other forms, such as ribs, radial tabs circling the grinding part 116, etc. depending on the design and requirement of the grinder, without deviating from the meaning and scope of the present invention.

Therefore, in exemplary situations where the user does not want to grind the whole amount of spices contained in the inner container 114, the user may twist the grinding handle 104 till the measuring cup is filled to a desired measuring marking or level 110. The ground spices enter the measuring cup 106 as they are ground, through the controlling mechanism. Thereafter, the user may dispense out the desired spice and the exact amount ground spices within a selected grinding size.

In another embodiment, the ground spices are also dispensed out from the closing lid 118, when the user needs to grind the whole amount of spices contained in the inner container 114.

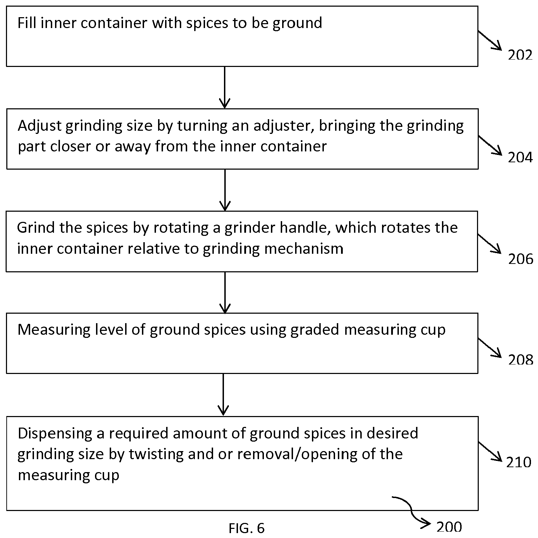

Referring to FIG. 6, showing a method for executing grinding process using the spice grinder 100, the method 200 is read and understood in conjunction with the FIGs. 1-5. The method 200 includes filling the grinder 100 with desired spices which are to be ground, at step 202. The closing lid 118 of the grinder 100 is opened, and the spices are put into the inner container 114. A user may put a desired amount of the spices, or just freely put the spices without measuring the amount.

At step 204, the user adjusts the particle size adjuster 108, by twisting the particle size adjuster 108 to a desired particle size marking 112. The adjuster 108 brings the grinding part 116 closer or away from the inner container 114 depending on the set desired particle size marking 112. The adjuster 108 gets locked into that position, locking the grinding part 116 at the corresponding distance from the inner container 114, depending on the desired particle size marking 112. At step 206, the user turns or rotates the grinding handle 104, which in turn rotates the inner container 114 relative to the stationary grinding part 116, grinding the spices contained in the grinder 100.

At step 208, the user keeps a watch on the amount of the ground spices during the grinding process, through the transparent cover of the measuring cup 106, and using the measuring levels 110. As the amount of the ground spices reach the desired level 110, the user may either remove or open the measuring cup 106, or twist the container and neatly dispenses the exact amount of ground spices with desired particle size, at step 210.

Advantageously, the present invention provides a portable spice grinder for grinding and dispensing a desired amount of the spices with a desired particle size, in a controlled hygienic way. The grinder grinds the spices with variable particle sizes, by adjusting the distance between the rotating inner container and the stationary grinding part. The grinder allows measuring the ground spices, during the grinding process using the measuring cup, while also allows dispensing an exact desired amount of ground spices. The grinder may grind different kinds of condiments, such as spices, for example pepper, berries, salt, herbs, etc, and is not restricted to grind only spices or herbs. The grinder provides even dispensing of the ground spices with known desired amount. In an embodiment, the spice grinder provided in the present invention may also operate semi-automatic, or automatic, in addition to being manually functioning. For being semi-automatic or fully automatic, the spice grinder may work electrically using electrical cable wires, or may be battery operated. The battery may or may not be rechargeable.

While certain embodiments have been described, these embodiments have been presented by way of example only, and are not intended to limit the scope of the present disclosure. Indeed, the novel methods, devices, and systems described herein may be embodied in a variety of other forms. Furthermore, various omissions, substitutions, and changes in the form of the methods, devices, and systems described herein may be made without departing from the spirit of the present disclosure.

## Claims

1. A grinder comprising an inner container and a grinding part, said inner container being provided within an outer container whereby said outer container comprises a measuring cup.

2. A grinder in accordance with claim 1 wherein said grinding part comprises: a grinding handle forming a grinding mechanism, said grinding part being provided opposite to the inner container, and where the rotating inner container being positioned and rotatably coupled to the grinding handle such that the inner container rotates along with the grinding handle as the grinding handle is turned, the inner container being configured to rotate relative to the grinding part;

3. A grinder in accordance with claim 1 and 2 further comprising: a particle size adjuster for adjusting particle size of ground product by controlling a distance between the rotating inner container and the stationary grinding part; and a removable measuring cup for observing quantity of product while and or after being ground using the grinding mechanism and dispensing out, a desired quantity of the ground product by twisting the grinder.

4. The grinder in accordance to claim 1-3, wherein the measuring cup is transparent allowing a user to observe the quantity of the ground product while and after the product is being ground, and/or whereby the measuring cup is graded with visual measuring markings or levels.

5. The grinder as claimed in claim 1-4, wherein the measuring markings are equally spaced marked lines on the measuring cup referring to measurable units for measuring quantities including grams, milligrams.

6. The grinder as claimed in claims 1-5, wherein the grinder further comprises a controlling mechanism for controlling the quantity of the ground product to be filled in the measuring cup; the controlling mechanism is radially provided between the inner container and the measuring cup around the grinding part allowing a portion of the ground product to enter the measuring cup, from the inner container, as and when the product is ground.

7. The grinder as claimed in claim 1-6, wherein the particle size adjuster is provided with visible particle size markings corresponding to multiple particles sizes which can be achieved from the grinder.

8. The grinder as claimed in claim 1-7, wherein the stationary grinding part is positioned at an axial distance opposite to the rotating inner container inside the grinder, and the rotating inner container and the stationary grinding part have respective grinding surfaces facing opposite to each other.

9. The grinder as claimed in claim 1-8, wherein the outer container and the grinding handle together form the outer body of the grinder, while the grinding handle is rotatable around the outer container.

10. The grinder as claimed in claim 1-9, wherein the particle size adjuster is rotated or turned along the outer container and is locked at a desired particle size marking corresponding to a particular desired particle size, the twisting of the particle size adjuster moves the stationary grinding part closer to or away from the rotating inner container depending on the desired locked particle size marking, and wherein the grinding part locks at the desired particle size marking, reaching a distance, corresponding to the locked particle size marking, relative to the inner container.

11. The grinder as claimed in claim 1-10, wherein the grinder grinds the product including spices, herbs, berries, other condiments such as coffee.

12. A method for manufacturing a portable grinder, the method comprises: providing an outer container coupled with a rotating or turning grinding handle, the outer container and the grinding handle forming an outer body of the grinder; providing an inner container inside the outer container of the grinder, the inner container being positioned relative to and configured to rotate with the rotating or turned grinding handle, providing a grinding part positioned opposite to the inner container, where the inner container is configured to rotate using the twisting grinding handle and relative to the grinding part; providing a measuring cup on the outer container.
